(19) Europäisches Patentamt
European Patent Office
Office européen des brevets

(11) EP 0 502 741 B1

(12) **EUROPEAN PATENT SPECIFICATION**

(45) Date of publication and mention
of the grant of the patent:
**02.06.1999 Bulletin 1999/22**

(51) Int Cl.$^6$: **H01L 41/04**, H01L 41/09

(21) Application number: **92301915.2**

(22) Date of filing: **05.03.1992**

(54) **Driving circuit for vibration driven motor**

Treiberschaltung für Vibrationsmotor

Circuit de commande pour moteur à vibrations

(84) Designated Contracting States:
**DE FR GB**

(30) Priority: **06.03.1991 JP 40114/91**

(43) Date of publication of application:
**09.09.1992 Bulletin 1992/37**

(73) Proprietor: **CANON KABUSHIKI KAISHA
Tokyo (JP)**

(72) Inventor: **Mukohjima, Hitoshi,
c/o Canon Kabushiki Kaisha
Ohta-ku, Tokyo (JP)**

(74) Representative:
**Beresford, Keith Denis Lewis et al
BERESFORD & Co.
2-5 Warwick Court
High Holborn
London WC1R 5DJ (GB)**

(56) References cited:
**EP-A- 0 426 042**

- **PATENT ABSTRACTS OF JAPAN vol. 12, no. 418
  (E-678)(3265) 7 November 1988 & JP - A - 63 154
  076**
- **PATENT ABSTRACTS OF JAPAN vol. 14, no. 120
  (E-899)(4063) 6 March 1990 & JP - A - 13 15 273**
- **PATENT ABSTRACTS OF JAPAN vol. 14, no. 451
  (E-984)27 September 1990 & JP - A - 21 79 282**

## Description

The invention relates to a vibration driven motor and, more particularly, to a driving circuit for a vibration driven motor.

In recent years, a vibration driven motor called an ultrasonic motor or a piezo-electric motor has been developed and has been put into practical use by the same applicant as the present invention or the like. As already well-known, the vibration driven motor is a new type motor of the non-electromagnetic driving type which is constructed in a manner such that by applying an alternating voltage to an electromechanical energy conversion element such as piezo-electric element, electro-strictive element, or the like, a high frequency vibration is caused in the above element, and a vibration energy is taken out as a continuous mechanical motion. The vibration driven motor is mainly classified into a standing wave type motor and a travelling vibration type motor according to the kind of vibration which occurs in the piezo-electric element or electro-strictive element.

Fig. 3 schematically shows a driving circuit of a conventional vibration driven motor of the travelling vibration type. Reference numeral 1 denotes a vibrator comprising a coupling member of a piezo-electric element or an electro-strictive element and an elastic member; 1a, 1b, 1a', and 1b' indicate driving electrodes for applying an alternating voltage to the piezo-electric element or electro-strictive element; 2 an oscillator to generate the alternating voltage; 3 a phase shifter of 90°; and 4a and 4b amplifiers.

As shown in the diagram, the above motor is a two-phase driven motor and there is no difference between the first and second phases except that the phase of alternating voltage which is applied to each phase is shifted by ± 90° by the 90°-phase shifter 3. Therefore, only the one-phase portion shown by reference numeral 5 will now be described.

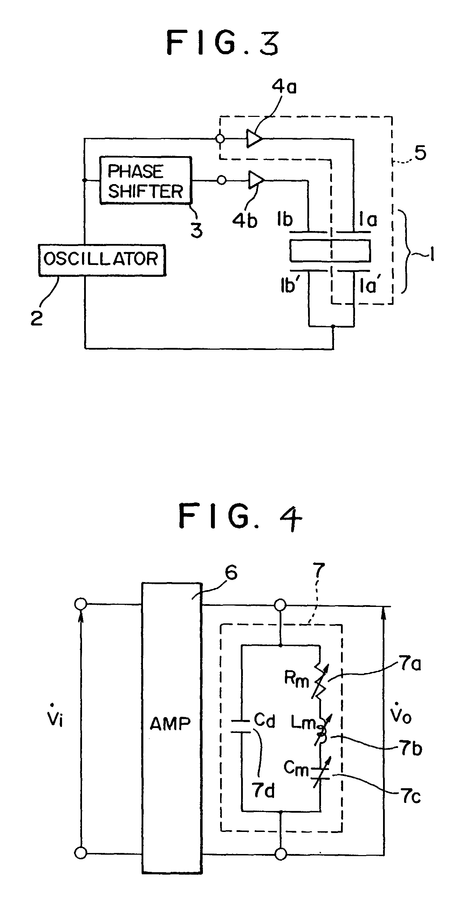

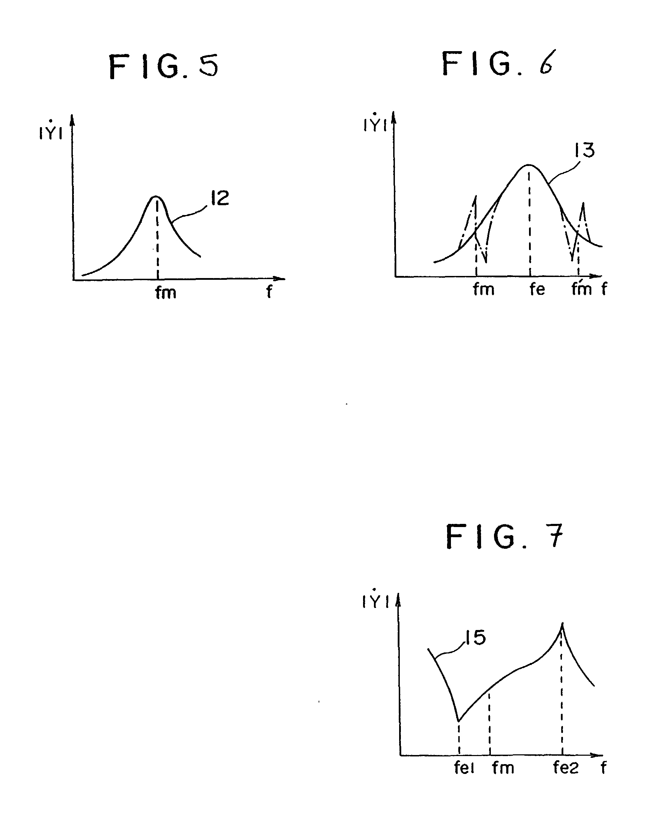

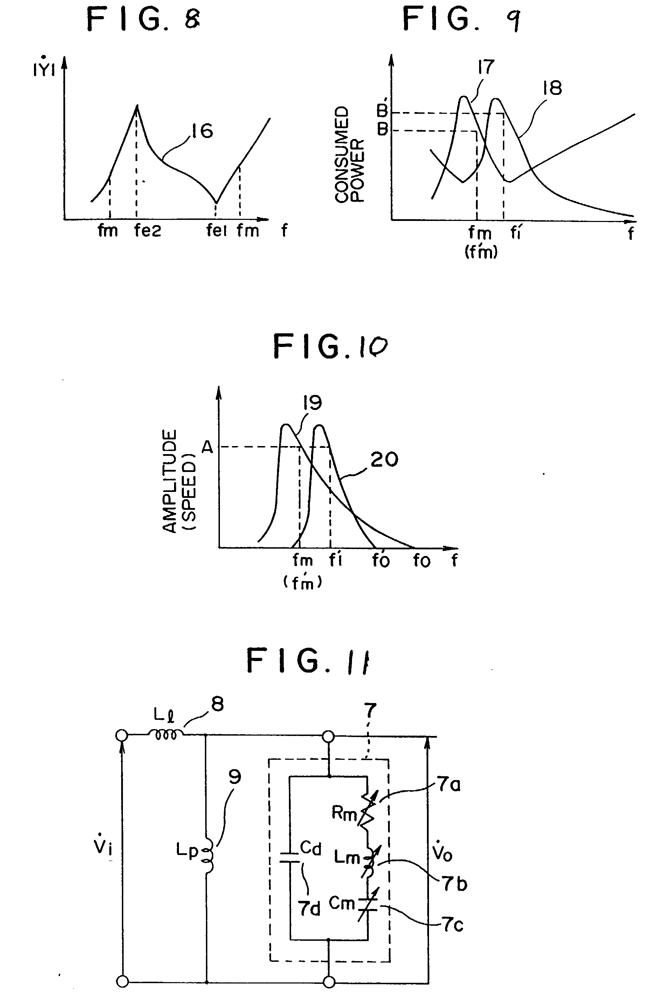

Fig. 4 shows an equivalent circuit of the first phase portion 5. Reference numeral 6 denotes an amplifying section; and 7 an equivalent circuit of the vibration driven motor. The equivalent circuit 7 comprises: an RLC serial circuit (which is constructed by an equivalent resistor 7a of a resistance value $R_m$, an equivalent coil 7b of a self-inductance $L_m$, and an equivalent capacitor 7c of an electrostatic capacitance $C_m$) of the mechanical vibrating portion; and a capacitor 7d of a specific electrostatic capacitance $C_d$ of the vibrator 1 which is connected in parallel with the RLC serial circuit.

However, hitherto, assuming that the alternating voltage which is applied is set to $V_i$ and the voltage across the driving electrodes la and la' is set to $V_0$, it is generally necessary to apply a voltage within a range from tens of volts to hundreds of volts to the vibration driven motor. Therefore, a voltage step-up ratio $n = |V_0/V_i|$ exerts a large influence on the characteristics of the motor.

The vibration driven motor increases and controls an amplitude of vibration wave by using the mechanical resonance. For this purpose, an alternating voltage of a frequency near a mechanical resonant frequency

$$f_m = 1/(2 \pi \sqrt{L_m C_m})$$

is applied. However, the equivalent circuit constants $R_m$, $L_m$, and $C_m$ of the mechanical vibration of the vibration driven motor are changed in dependence on an environmental temperature of the motor, a magnitude of amplitude, or the like. Therefore, in the frequency characteristics of the equivalent circuit shown in Fig. 4 an input electric power and an output power of the motor largely change. A driving circuit suitable for the above frequency characteristics is needed. DE 4000947 discloses apparatus for driving an ultrasonic transducer (vibration driven motor), the driver being adapted such that its electrical resonant frequency is matched with that of the mechanical resonant frequency of the driven ultrasonic transducer.

## SUMMARY OF THE INVENTION

It is an object of the invention to provide a driving circuit suitable for a vibration driven motor.

An embodiment of the invention provides a cheap and simple driving circuit in addition to the above object.

According to one aspect of the invention, there is provided an actuator comprising a vibration member and an electromechanical energy conversion member having electrodes to apply electric energy to said conversion member for producing a vibration in said vibration member in response to the electric energy, wherein said vibration member and said conversion member have an equivalent electrical circuit including a series branch between said electrodes which has an inductance, a, resistance, and a capacitance all representing a mechanical vibrating portion of said vibration member and said conversion member, and an electrostatic capacitance in parallel with said series branch,

characterised by

inductance means serially connected to one of said electrodes, wherein the mechanical resonant frequency of said vibration member and said conversion member is within a frequency band satisfying the following condition:-

$$\frac{\partial |Y|}{\partial \omega} > 0,$$

wherein Y is the admittance of an electrical resonant circuit portion including said inductance and said electrostatic capacitance and $\underline{\omega}$ is the angular frequency.

Preferred embodiments of the invention will now be described by way of example, with reference to the drawings, in which:

Fig. 1 is an equivalent circuit diagram showing the first embodiment of a vibration driven motor according to the invention;
Fig. 2 is an equivalent circuit diagram showing a second embodiment of a vibration driven motor according to the invention;
Fig. 3 is a circuit diagram showing a driving circuit of a conventional vibration driven motor;
Fig. 4 is an equivalent circuit diagram of a driving phase in Fig. 3;
Fig. 5 is a characteristic graph showing characteristics of an RLC serial circuit shown in Fig. 4;
Fig. 6 is a characteristic graph showing characteristics of the first embodiment;
Fig. 7 is a characteristic diagram showing characteristics of an embodiment shown in Fig. 11;
Fig. 8 is a characteristic diagram showing characteristics of the embodiment of Fig. 11 together with Fig. 7;
Fig. 9 is an explanatory diagram showing a consumed power according to the invention;
Fig. 10 is an explanatory diagram showing speed characteristics according to the invention; and
Fig. 11 is an equivalent circuit diagram showing the third embodiment of the invention.

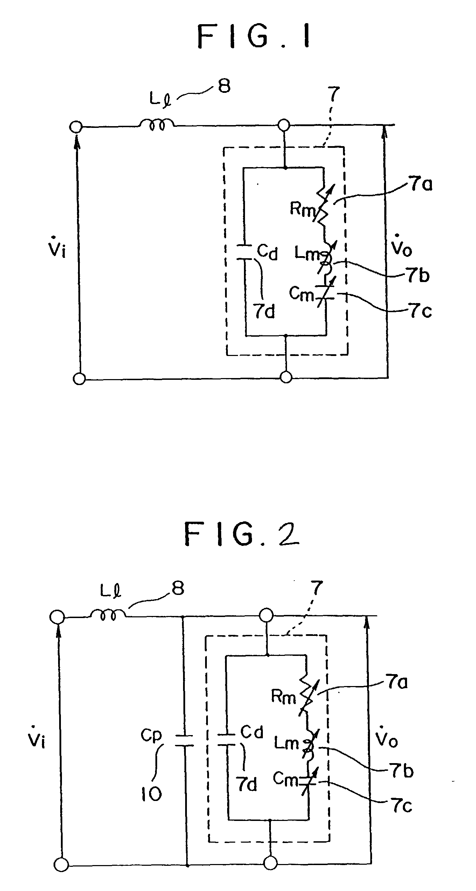

Fig. 1 is an equivalent circuit diagram of the first embodiment of a driving circuit for a vibration driven motor according to the invention. Reference numeral 7 denotes the equivalent circuit of the vibration driven motor and 8 indicates an inductance element having an inductance $L_e$ connected serially to the equivalent circuit 7.

Since the other portions of the driving circuit for the vibration driven motor and the mechanical structure of the vibration driven motor are substantially the same as those of the well-known driving circuit and vibration driven motor, their descriptions are omitted here.

As already mentioned above, the components $R_m$, $L_m$, and $C_m$ of the RLC serial circuit section of the mechanical vibrating portion of the vibration driven motor in the above equivalent circuit are changed in accordance with the environmental temperature of the motor, magnitude of the amplitude, or the like.

In Fig. 5 a solid line 12 shows frequency characteristics of an absolute value IYI of an admittance of the RLC serial circuit section shown in Fig. 1.

$$IYI = \frac{1}{\sqrt{R_m^2 + \left( \omega L_m - \frac{1}{\omega C_m} \right)^2}} \qquad (1)$$

where, $(\omega = 2\pi f)$

As will be understood from the equation (1), IYI has the maximum value at the mechanical resonant fre-

quency

$$f_m = 1/(2\pi \sqrt{L_m C_m})$$

Fig. 6 shows frequency characteristics of the absolute value IYI of the admittance of the equivalent circuit of Fig. 1. A solid line 13 shows the frequency characteristics in the case where the RLC serial circuit of the mechanical vibrating portion is eliminated from the equivalent circuit of Fig. 1. In the above case, the serial resonance circuit comprising the inductance $L_e$ and electrostatic capacitance $C_d$ which are serially connected is used as an equivalent circuit. IYI has the maximum value at the electrical resonant frequency

$$f_e = 1/(2\pi \sqrt{L_e C_d})$$

By adding the equivalent circuit (RLC serial circuit) of the mechanical vibrating portion to the above construction, characteristics as shown by an alternate long and short dash line are obtained. $f_m$ and $f_m'$ indicate mechanical resonant frequencies. Characteristics in both of the cases where $f_m < f_e$ and $f_m' > f_e$ are shown.

Fig. 9 shows frequency characteristics of the consumed powers in both of the above two cases. Fig. 10 shows an amplitude (speed) in the case of each of the above consumed powers. To generate the alternating voltage $V_i$, the driving circuit of the vibration driven motor generally allows a DC power source to perform a switching operation by a transistor, an FET, or the like. Therefore, in the case of considering the consumed power in the driving circuit, it is necessary to consider it by an apparent power instead of considering it by only the effective power. The consumed power in Fig. 9 indicates the apparent power and is equal to the product of IYI and the voltage. When $f_m < f_e$, characteristics shown by solid lines 17 and 19 are obtained. When $f_m' > f_e$, characteristics shown by solid lines 18 and 20 are derived.

As shown in Fig. 10 amplitude (speed) characteristics of the vibrator have hysteresis characteristics which are gentle in a high frequency region and are sharp in a low frequency region. Therefore, in the case of performing a speed control of the motor by changing a driving frequency, in general, a frequency region higher than $f_m$ ($f_m'$) is used. In the case where a frequency region higher than an amplitude (speed) A near $f_m$ is used and $f_m < f_e$, a wide frequency region of $f_0$ to $f_m$ can be used and the gentle speed control can be performed. When $f_m' > f_e$, however, a narrow frequency region of $f_0'$ to $f_i'$ must be used. Moreover, at a frequency $f_i'$, there is a relation of $f_i' > f_m'$ and such a state is not a mechanical resonant state. Therefore, an efficiency is low and a consumed power B' at that time is larger than the consumed power B in the case of $f_m < f_e$. Therefore, in the con-

struction of Fig. 1, the apparatus is constructed so as to set the relation of $f_m < f_e$.

As shown in the above embodiments, the motor can be effectively driven by setting the mechanical resonant frequency to such a frequency that the admittance Y of the circuit from which the RLC serial circuit section of the mechanical vibrating portion of the vibration driven motor is eliminated satisfies the following relation

$$\frac{\partial \, |Y|}{\partial \omega} > 0$$

Since it is generally necessary to apply a voltage within a range from tens of volts to hundreds of volts to the vibration driven motor, when the alternating voltage $V_i$ on the input side is set to a low voltage source, it is necessary to step up the voltage $V_0$ across the driving electrodes.

Fig. 2 is an equivalent circuit showing a second embodiment of the invention. Reference numeral 7 denotes the equivalent circuit of the vibration driven motor; 8 the inductance element having the inductance $L_e$ connected serially to the equivalent circuit 7; and 10 an electrostatic capacitance element having an electrostatic capacitance $C_p$ connected in parallel with the circuit 7. By connecting the electrostatic capacitance element 10 in parallel as mentioned above, the sum $(C_p + C_d)$ of the electrostatic capacitance $C_p$ and self-electrostatic capacitance $C_d$ can be regarded as an electrostatic capacitance of the electrical LC serial resonance circuit, so that an effect similar to that in Fig. 1 is obtained.

Since the frequency characteristics of the admittance Y and voltage step-up ratio when the LC resonance circuit is used change in accordance with the values of L and C, it is effective to add the proper electrostatic capacitance $C_p$ in parallel as mentioned above when desired characteristics are not obtained because the self-electrostatic capacitance $C_d$ is too small or the like.

Fig 11 shows an equivalent circuit showing the third embodiment of the invention. Reference numeral 7 denotes the equivalent circuit of the vibration driven motor; 8 the inductance element having the inductance $L_e$ connected serially to the circuit 7; and 9 the inductance element having the inductance $L_p$ connected in parallel to the circuit 7.

Figs. 7 and 8 show frequency characteristics of the absolute value IYI of the admittance of the equivalent circuit of Fig. 11 Solid lines 15 and 16 indicate frequency characteristics in the cases where the RLC serial circuit of the mechanical vibrating portion is eliminated from the equivalent circuit of Fig. 11. In this case, the absolute value IYI has the minimum value at an electrical LC parallel resonance frequency $f_{e1}$ of the inductance $L_p$ and electrostatic capacitance $C_d$ which are connected in parallel

$$f_{e1} = 1/(2\pi \sqrt{L_p C_d})$$

The absolute value IYI has the maximum value at an electrical LC serial resonant frequency $f_{e2}$ of the inductance $L_e$ and electrostatic capacitance $C_d$ which are serially connected

$$f_{e2} = 1/(2\pi \sqrt{L_l C_d})$$

Fig. 7 shows the characteristics when $f_{e1} < f_{e2}$. Fig.8 shows the characteristics when $f_{e1} > f_{e2}$. In a manner similar to that described in the foregoinq embodiments, in the case of the embodiment of Fig. 11 the motor can be further efficiently driven by setting the mechanical resonant frequency $f_m$ to the following frequency.

$$\frac{\partial |Y|}{\partial \omega} > 0$$

As described above, according to the invention, at least one inductance element is connected serially or both of serially and in parallel between the driving electrodes of the vibration driven motor and the electrical LC resonance is used and the mechanical resonant frequency for driving is set to a frequency such that the admittance Y of the circuit from which the RLC serial circuit section of the mechanical vibrating portion of the vibration driven motor is eliminated satisfies the following relation

$$\frac{\partial |Y|}{\partial \omega} > 0$$

Due to this, a gentle speed control can be performed by using the wide frequency region and the consumed power can be also reduced.

## Claims

1. An actuator comprising a vibration member and an electromechanical energy conversion member having electrodes (1a, 1a[1]; 1b, 1b[1]) to apply electric energy to said conversion member for producing a vibration in said vibration member in response to the electric energy, wherein said vibration member and said conversion member have an equivalent electrical circuit (7) including a series branch between said electrodes (1a, 1a[1]; 1b, 1b[1]) which has an inductance (7b), a resistance (7a), and a capacitance (7c) all representing a mechanical vibrating portion of said vibration member and said conversion member, and an electrostatic capacitance (7d) in parallel with said series branch,
   characterised by

inductance means (8) serially connected to one of said electrodes (1a, 1b), wherein the mechanical resonant frequency of said vibration member and said conversion member is within a frequency band satisfying the following condition:-

$$\frac{\partial |Y|}{\partial \omega} > 0,$$

wherein Y is the admittance of an electrical resonant circuit portion including said inductance (8) and said electrostatic capacitance (7d) and $\underline{\omega}$ is the angular frequency.

2. An actuator as claimed in claim 1, characterised in that said electrical resonant circuit includes an inductance element (9) connected in parallel with said electrodes (1a, 1a$^1$; 1b, 1b$^1$) of said conversion member.

3. An actuator as claimed in claim 1, characterised in that said electrical resonant circuit includes a capacitor (10) connected in parallel with said electrodes (1a, 1a$^1$; 1b, 1b$^1$) of said conversion member.

4. A vibration driven motor including an actuator comprising a vibration member and an electromechanical energy conversion member having electrodes (1a, 1a$^1$; 1b, 1b$^1$) to apply electric energy to said conversion member for producing a vibration in said vibration member in response to the electric energy, wherein said vibration member and said conversion member have an equivalent electrical circuit (7) including a series branch between said electrodes (1a, 1a$^1$; 1b, 1b$^1$) which has an inductance (7b), a resistance (7a), and a capacitance (7c) all representing a mechanical vibrating portion of said vibration member and said conversion member, and an electrostatic capacitance (7d) in parallel with said series branch,
characterised by
inductance means (8) serially connected to one of said electrodes (1a, 1b), wherein the mechanical resonant frequency of said vibration member and said conversion member is within a frequency band satisfying the following condition:-

$$\frac{\partial |Y|}{\partial \omega} > 0,$$

wherein Y is the admittance of an electrical resonant circuit portion including said inductance (8) and said electrostatic capacitance (7d) and $\underline{\omega}$ is the angular frequency.

5. A vibration driven motor according to claim 4, characterised in that said electrical resonant circuit includes an inductance element (9) connected in parallel with said electrodes (1a, 1a$^1$; 1b, 1b$^1$) of said conversion member.

6. A vibration driven motor according to claim 4, characterised in that said electrical resonant circuit includes a capacitor (10) connected in parallel with said electrodes (1a, 1a$^1$; 1b, 1b$^1$) of said conversion member.

**Patentansprüche**

1. Antriebsvorrichtung mit einem Vibrationsteil und einem elektromechanischen Energieumwandlungsteil, das Elektroden (1a, 1a'; 1b, 1b') zur Zufuhr von elektrischer Energie zu dem Umwandlungsteil aufweist, damit eine Vibration in dem Vibrationsteil als Reaktion auf die elektrische Energie erzeugt wird, wobei das Vibrationsteil und das Umwandlungsteil eine elektrische Ersatzschaltung (7) besitzen, die zwischen den Elektroden (1a, 1a'; 1b, 1b') einen Längszweig, der eine Induktivität (7b), einen Widerstand (7a) und eine Kapazität (7c) umfaßt, die zusammen einen mechanischen Vibrationsabschnitt des Vibrationsteils und des Umwandlungsteils darstellen, sowie eine zu dem Längs zweig parallel geschaltete elektrostatische Kapazität (7d) aufweist,
**gekennzeichnet durch**
eine zu einer der Elektroden (1a, 1b) in Reihe geschalteten Induktivitätseinrichtung (8), wobei die mechanische Resonanzfrequenz des Vibrationsteils und des Umwandlungsteils in einem Frequenzband liegt, das der nachstehenden Bedingung genügt:

$$\frac{\delta |Y|}{\delta \omega} > 0$$

wobei Y die Admittanz eines elektrischen Resonanzschaltungsabschnitts, der die Induktivität (8) und die elektrostatische Kapazität (7d) aufweist, und $\underline{\omega}$ die Winkelfrequenz darstellt.

2. Antriebsvorrichtung nach Anspruch 1, **dadurch gekennzeichnet**, daß die elektrische Resonanzschaltung ein Induktivitätselement (9) aufweist, das parallel zu den Elektroden (1a, 1a'; 1b, 1b') des Umwandlungsteils geschaltet ist.

3. Antriebsvorrichtung nach Anspruch 1, **dadurch gekennzeichnet**, daß die elektrische Resonanzschaltung eine Kapazität (10) aufweist, die parallel zu den Elektroden (1a, 1a'; 1b, 1b') des Umwandlungsteils geschaltet ist.

4. Vibrationsmotor, der eine Antriebsvorrichtung mit einem Vibrationsteil und einem elektromechanischen Energieumwandlungsteil aufweist, das Elektroden (1a, 1a'; 1b, 1b') zur Zufuhr von elektrischer Energie zu dem Umwandlungsteil aufweist, damit eine Vibration in dem Vibrationsteil als Reaktion auf die elektrische Energie erzeugt wird, wobei das Vibrationsteil und das Umwandlungsteil eine elektrische Ersatzschaltung (7) besitzen, die zwischen den Elektroden (1a, 1a'; 1b, 1b') einen Längszweig, der eine Induktivität (7b), einen Widerstand (7a) und eine Kapazität (7c) umfaßt, die zusammen einen mechanischen Vibrationsabschnitt des Vibrationsteils und des Umwandlungsteils darstellen, sowie eine zu dem Längszweig parallel geschaltete elektrostatische Kapazität (7d) aufweist,

**gekennzeichnet durch**

eine zu einer der Elektroden (1a, 1b) in Reihe geschalteten Induktivitätseinrichtung (8), wobei die mechanische Resonanzfrequenz des Vibrationsteils und des Umwandlungsteils in einem Frequenzband liegt, das der nachstehenden Bedingung genügt:

$$\frac{\delta |Y|}{\delta \omega} > 0$$

wobei Y die Admittanz eines elektrischen Resonanzschaltungsteils, das die Induktivität (8) und die elektrostatische Kapazität (7d) aufweist, und $\underline{\omega}$ die Winkelfrequenz darstellt.

5. Vibrationsmotor nach Anspruch 4, **dadurch gekennzeichnet**, daß die elektrische Resonanzschaltung ein Induktivitätselement (9) aufweist, das parallel zu den Elektroden (1a, 1a'; 1b, 1b') des Umwandlungsteils geschaltet ist.

6. Vibrationsmotor nach Anspruch 4, **dadurch gekennzeichnet**, daß die elektrische Resonanzschaltung eine Kapazität (10) aufweist, die parallel zu den Elektroden (1a, 1a'; 1b, 1b') des Umwandlungsteils geschaltet ist.

**Revendications**

1. Actionneur comportant un organe de vibration et un organe de conversion d'énergie électromécanique ayant des électrodes (1a, 1a[1] ; 1b, 1b[1]) pour l'application d'énergie électrique audit organe de conversion afin de produire une vibration dans ledit organe de vibration en réponse à l'énergie électrique, dans lequel ledit organe de vibration et ledit organe de conversion ont un circuit électrique équivalent (7) comprenant une branche en série entres lesdites électrodes (1a, 1a[1] ; 1b, 1b[1]) qui a une inductance (7b), une résistance (7a) et une capacité (7c) représentant toutes une partie mécanique vibrante dudit organe de vibration et dudit organe de conversion, et une capacité électrostatique (7d) en parallèle avec ladite branche en série,

caractérisé par

un moyen à inductance (8) connecté en série à l'une desdites électrodes (1a, 1b), dans lequel la fréquence de résonance mécanique dudit organe de vibration et dudit organe de conversion est comprise dans une bande de fréquences satisfaisant à la condition suivante :

$$\frac{\partial |Y|}{\partial \omega} > 0,$$

dans laquelle Y est l'admittance d'une partie de circuit électrique résonant comprenant ladite inductance (8) et ladite capacité électrostatique (7d) et $\underline{\omega}$ est la pulsation.

2. Actionneur selon la revendication 1, caractérisé en ce que ledit circuit électrique résonant comprend un élément à inductance (9) connecté en parallèle avec lesdites électrodes (1a, 1a[1] ; 1b, 1b[1]) dudit organe de conversion.

3. Actionneur selon la revendication 1, caractérisé en ce que ledit circuit électrique résonant comprend un condensateur (10) connecté en parallèle avec lesdites électrodes (1a, 1a[1] ; 1b, 1b[1]) dudit organe de conversion.

4. Moteur activé par vibration comprenant un actionneur comportant un organe de vibration et un organe de conversion d'énergie électromécanique ayant des électrodes (1a, 1a[1] ; 1b, 1b[1]) pour l'application d'énergie électrique audit organe de conversion afin de produire une vibration dans ledit organe de vibration en réponse à l'énergie électrique, dans lequel ledit organe de vibration et ledit organe de conversion ont un circuit électrique équivalent (7) comprenant une branche en série entre lesdites électrodes (1a, 1a[1] ; 1b, 1b[1]) qui possède une inductance (7b), une résistance (7a) et une capacité (7c) représentant toutes une partie mécanique vibrante dudit organe de vibration et dudit organe de conversion, et une capacité électrostatique (7d) en parallèle avec ladite branche en série,

caractérisé par

un moyen à inductance (8) connecté en série à l'une desdites électrodes (1a, 1b), dans lequel la fréquence de résonance mécanique dudit organe de vibration et dudit organe de conversion est comprise dans une bande de fréquences satisfaisant à la condition suivante :

$$\frac{\partial |Y|}{\partial \omega} > 0,$$

dsans laquelle Y est l'admittance d'une partie de circuit électrique résonant comprenant ladite inductance (8) et ladite capacité électrostatique (7d) et $\underline{\omega}$ est la pulsation.

5.  Moteur activé par vibration selon la revendication 4, caractérisé en ce que ledit circuit électrique résonant comprend un élément à inductance (9) connecté en parallèle avec lesdites électrodes (1a, 1a$^1$ ; 1b, 1b$^1$) dudit organe de conversion.

6.  Moteur activé par vibration selon la revendication 4, caractérisé en ce que ledit circuit électrique résonant comprend un condensateur (10) connecté en parallèle avec lesdites électrodes (1a, 1a$^1$ ; 1b, 1b$^1$) dudit organe de conversion.

# F I G . 1

# F I G . 2

# FIG. 3

# FIG. 4

# FIG. 5

# FIG. 6

# FIG. 7

# FIG. 8

# FIG. 9

# FIG. 10

# FIG. 11